# EUROPEAN PATENT APPLICATION

(11) **EP 4 432 631 A1**
(43) Date of publication of application: **18.09.2024**
(21) Application number: 23213819.8
(22) Date of filing: 01.12.2023
(51) Int. Cl.: H04L 67/10, H04L 67/12, H04L 67/51, H04L 67/56, H04L 67/59

(54) **PROXY OFFLOAD TO NETWORK INTERFACE DEVICE**

(30) Priority: 17.03.2023 WO PCT/CN2023/082067; 10.04.2023 US 202318132666
(71) Applicant: INTEL Corporation, Santa Clara, CA 95054 (US)
(72) Inventor: LI, Chun, Shanghai, 200125 (CN); ZHANG, Kefei, Shanghai, 201615 (CN); JAIN, Nupur, Saratoga, 95070 (US); DALY, Daniel, Santa Barbara, 93111 (US); CHEN, Edmund, Sunnyvale, 94085 (US); ZHAO, Fusheng, Shanghai, 200241 (CN)
(74) Representative: Rummler, Felix

(57) **Abstract**

Examples described herein relate to a system for offloading a proxy for microservice-to-microservice communication to a network interface device. In some examples, the system includes a host interface and a network interface device circuitry comprising circuitry coupled to the host interface. In some examples, the circuitry is configured to: perform offloaded proxy operations of a service mesh interface for multiple services, wherein the circuitry is accessible via a virtual network device by a host processor-executed service of the multiple services and wherein the service mesh interface is to provide access to a service mesh to communicate with one or more services.

## Description

### RELATED APPLICATION

This application claims the benefit of priority to Patent Cooperation Treaty (PCT) Application No. PCT/CN2023/082067, filed March 24, 2023. The entire content of that application is incorporated by reference.

### DESCRIPTION

An application can be executed using a group of microservices executed on different servers. Microservices can communicate with other microservices using packets transmitted over a network via a service mesh. A service mesh can include an infrastructure layer for facilitating service-to-service communications between microservices using application programming interfaces (APIs). Some network protocols used by microservice communications include Layer 7 protocols, such as Hypertext Transfer Protocol (HTTP), HTTP/2, remote procedure call (RPC), gRPC, Kafka, MongoDB wire protocol, and so forth. A service mesh implementation utilizes a sidecar to intercept and route the traffic from a service.

Istio is an example service mesh that can include a data plane and a control plane. The data plane can include a set of proxies (e.g., Envoy) deployed as sidecars and proxies can mediate and control network communication between microservices based on configurations from a control plane.

### BRIEF DESCRIPTION OF THE DRAWINGS

FIG. 1 depicts an example system.
FIG. 2 depicts an example system.
FIG. 3 depicts an example known proxy mode data flow.
FIG. 4 depicts an example system.
FIG. 5 depicts an example of net_dev development.
FIG. 6 depicts an example process.
FIG. 7 depicts an example network interface device.
FIG. 8 depicts an example computing system.

### DETAILED DESCRIPTION

System resource consumption and performance are critical considerations to cloud service providers that invest in service mesh infrastructure. The sidecar communication model for services can utilize processor resources that could otherwise be utilized to execute applications and introduce latency into service-to-service communications. Some examples, described herein, can attempt to reduce latency of service-to-service communications by offloading a proxy for communications for services into a network interface device while executing a service by a processor in a server or host. Some examples provide for offloading proxy operations into a network interface device with a separate set of compute, networking, and memory resources, and provide separation of service and proxy operations and a separate trust domain from that of a host. A service, executed by a host, can communicate with an accelerator device or network interface device by a virtual net device (e.g., hardware accelerated interface, Linux net-dev, or net_dev) to provide packets directly to the accelerator device or network interface device and bypass network stack processing.

In some examples, a host can execute service workloads in a proxy less mode and utilize load-balancing of the proxy executed by a network interface device. By offloading side car and proxy operations to a network interface device, the host processors can be freed to execute service workloads. Moreover, utilization of packet processing by the network interface device can potentially improve communication latency and network quality of service (QoS).

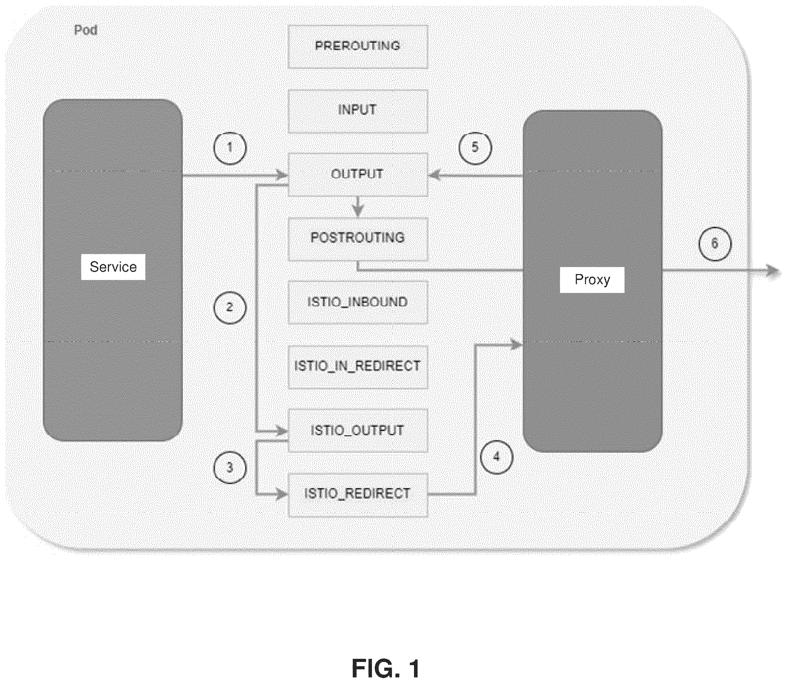

FIG. 1 depicts a known sidecar mode data flow. In some proxies, packets can be processed by sequentially traversing rules in Netfilter chains. Predefined chains can apply a policy, such as packet drop. A system administrator can define rules in the chain. An example of processing a packet via a chain from application to proxy prior to transmission to a receiver system is as follows. At (1), an application initiates the request for performance by an OUTPUT chain to cause packets to be transmitted. At (2), output packets will be processed by ISTIO _OUTPUT chain to direct packets to ISTIO_REDIRECT. At (3), ISTIO_REDIRECT chain can direct packets to Envoy to perform a proxy operation. At (4), the proxy (e.g., Envoy) can lookup routes and hosts, dynamically configured by a control plane, and accept or reject a connection. At (5), if the connection is accepted, the proxy can initiate a new connection to a receiver system that executes a destination service. At (6), due to socket initiation by the proxy, the packets can be processed by the POSTROUTING chain to make a routing decision to the receiver system. After the POSTROUTING chain, a network interface can transmit the packets to the receiver system.

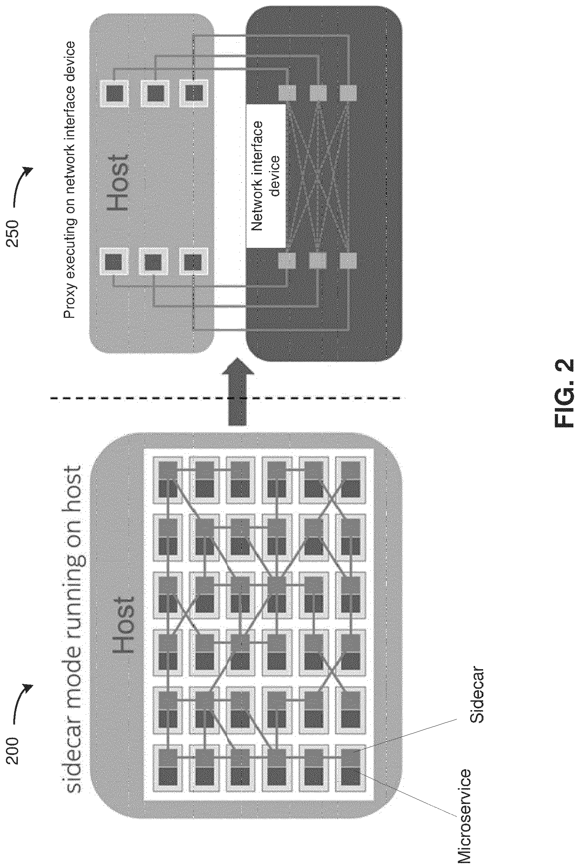

FIG. 2 depicts an example system. In configuration 200, a host executes an application (e.g., microservice) instance and its corresponding sidecar and proxy. In this example, applications, sidecar, and proxy execute on a single host.

Configuration 250 provides for offloading service mesh sidecars and proxies to a network interface device. A proxy can perform one or more of: identification of a target microservice and routing and forwarding of traffic to a device that executes a target microservice, as well as other operations described herein. A proxy can be executed in a container in a network interface device, in some examples. In some examples, a proxy can be consistent with Istio, Envoy, and others. Central processing unit (CPU) and memory utilization of a host can be reduced by offloading proxy operations to a network interface device.

Various examples can utilize an orchestrator to deploy services for execution in accordance with Kubernetes, Docker, OpenStack, Apache Mesos, and so forth. Examples can be applied at least to Kubernetes, Istio, or other cloud native orchestrators and service meshes.

Various examples described herein can perform a service executed in a virtual machine. A virtual machine (VM) can be software that runs an operating system and one or more applications. A VM can be defined by specification, configuration files, virtual disk file, non-volatile random access memory (NVRAM) setting file, and the log file and is backed by the physical resources of a host computing platform. A VM can include an operating system (OS) or application environment that is installed on software, which imitates dedicated hardware. The end user has the same experience on a virtual machine as they would have on dedicated hardware. Specialized software, called a hypervisor, emulates the PC client or server's CPU, memory, hard disk, network and other hardware resources completely, enabling virtual machines to share the resources. The hypervisor can emulate multiple virtual hardware platforms that are isolated from another, allowing virtual machines to run Linux^{®}, Windows^{®} Server, VMware ESXi, and other operating systems on the same underlying physical host.

Various examples described herein can perform a service executed in a container. A container can be a software package of applications, configurations and dependencies so the applications run reliably on one computing environment to another. Containers can share an operating system installed on the server platform and run as isolated processes. A container can be a software package that contains everything the software needs to run such as system tools, libraries, and settings. Containers may be isolated from the other software and the operating system itself. The isolated nature of containers provides several benefits. First, the software in a container will run the same in different environments. For example, a container that includes PHP and MySQL can run identically on both a Linux^{®} computer and a Windows^{®} machine. Second, containers provide added security since the software will not affect the host operating system. While an installed application may alter system settings and modify resources, such as the Windows registry, a container can only modify settings within the container.

Various examples described herein can perform an application composed of microservices, where a microservice executes in a container and communicates using protocols (e.g., application program interface (API), a Hypertext Transfer Protocol (HTTP) resource API, message service, remote procedure calls (RPC), or Google RPC (gRPC)). Microservices can communicate with one another using a service mesh interface and be executed in one or more data centers or edge networks. Microservices can be independently deployed using centralized management of these services. The management system may be written in different programming languages and use different data storage technologies. A microservice can be characterized by one or more of: polyglot programming (e.g., code written in multiple languages to capture additional functionality and efficiency not available in a single language), or lightweight container or virtual machine deployment, and decentralized continuous microservice delivery.

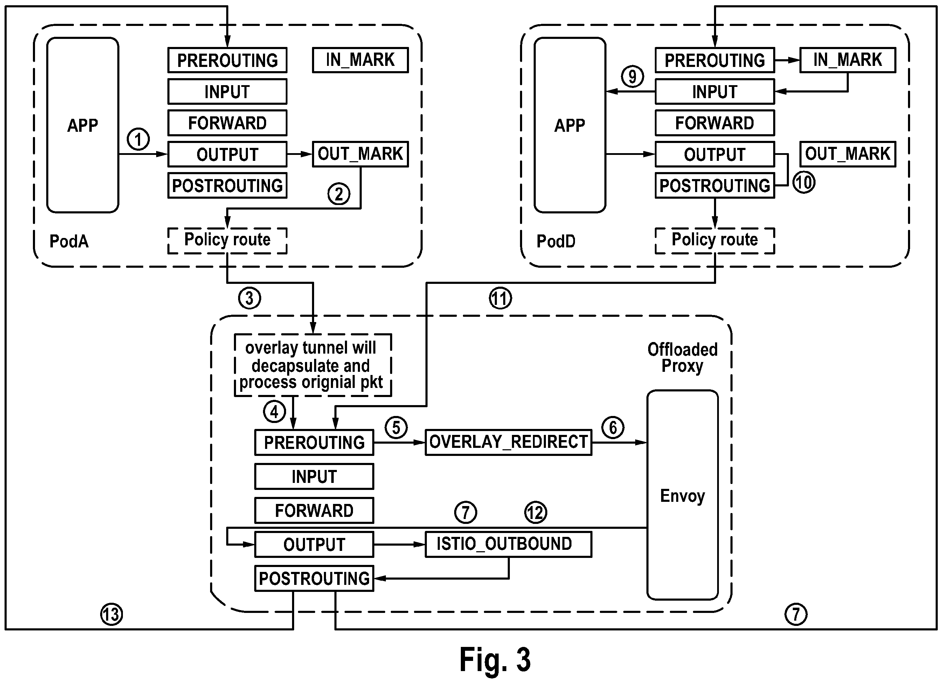

FIG. 3 depicts an example known proxy mode data flow. In pod A, application (APP) uses Netfilter chains for processing packets prior to accessing the proxy (e.g., Envoy). In pod B, application (APP) uses Netfilter chains for processing packets prior to accessing the proxy (e.g., Envoy proxy). For example, an application can be implemented as one or more of: one or more microservices, one or more services, one or more virtual machine (VMs), one or more microVMs, one or more containers, one or more pods (e.g., one or more Kubernetes pods), one or more processes, one or more threads, or other virtualized execution environments. Note that examples of applications can be used interchangeably, so that a VM can refer to an application, one or more services, one or more containers, and so forth.

For example, when application in pod A sends packets to an application in pod B, operations (1)-(9) can be performed and a container that executes the proxy also utilizes Netfilter chains for processing packets prior to accessing the proxy. For example, when application in pod B sends response packets to the application in pod A, operations (10)-(13) can be performed and a container that executes the proxy also can utilize Netfilter chains for processing packets prior to accessing the proxy.

At (1), application in pod A (PodA) initiates a request to transmit a packet and provides the request into the OUTPUT Netfilter chain. At (2), the OUTPUT chain identifies a flow as a new connection. At (3), a routing policy can be applied to the packet and a MARK field can identify a new connection. The packet can be conveyed in an overlay tunnel to the container that executes the pod. At (4), the packet overlay tunnel can be decapsulated from the overlay tunnel and the original packet processed by the PREROUTING Netfilter chain. At (5), the packet can be classified and redirected to the proxy (e.g., Envoy).

At (6), the proxy can lookup routes and hosts as dynamically configured by a control plane and accept or reject the connection based on an applicable policy. At (7), if an applicable policy is to accept the connection, the proxy can initiate a new connection to the target application. In this example, the target application is the application (APP) executed in pod B.

At (8), as the socket is initiated by the proxy, the packet can proceed into the POSTROUTING Netfilter chain of the proxy container. Between upstream the proxy container and the container of application (e.g., APP in pod B), a connection can be created with no tunneling overlay. At (9) and (10), in pod B, an applicable Netfilter chain can be applied and a policy routing can be applied.

In (11) - (13), the packets can be processed and a response provided from APP executed in pod B to the APP executed in pod A (e.g., requester) via the proxy.

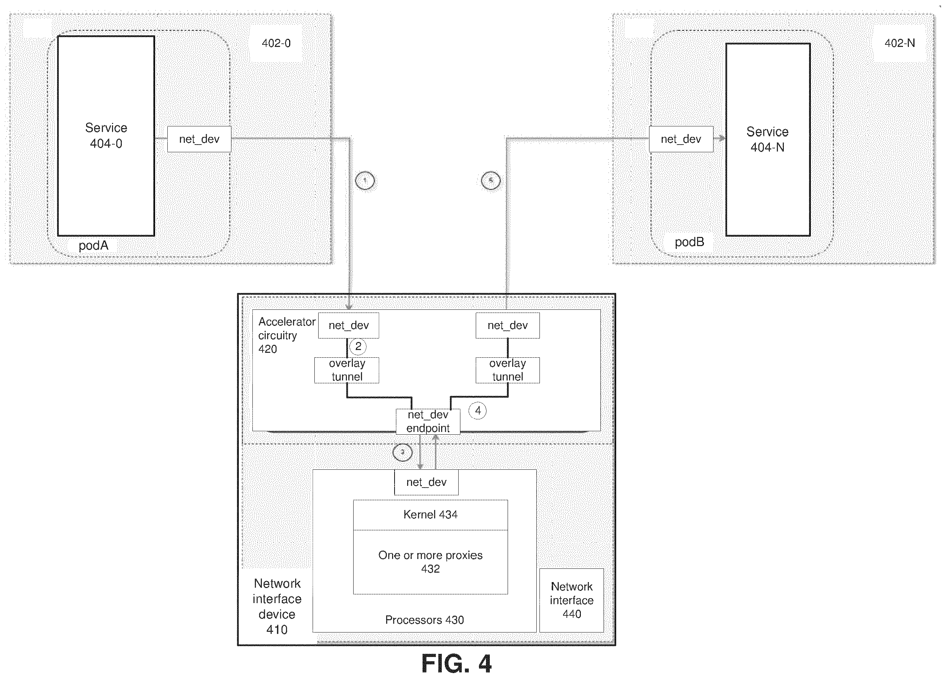

FIG. 4 depicts an example system. One or more services can access a proxy offloaded to network interface device 410. Network interface device 410 can execute one or more proxies 432 and based on an applicable cluster policy for a requester service and load balance to one or more proxies 432, adjust a number of instances of the proxy or resources allocated to the proxy. For example, resources can include one or more of: allocated amount of memory, allocated memory bandwidth, allocated amount of storage, allocated network interface bandwidth, frequency of operation of a processor, number of allocated processor cores, type and number of allocated accelerators, or others.

For example, in pod A, service 404-0 can access a virtual network device (e.g., Linux net_dev) and bypass Netfilter (network filter) chains in a kernel executed on host 402-0 and provide packets to device queues accessible to accelerator circuitry 420. For example, net_dev can provide service 404-0 with access to at least one device queue. Service 404-0 can access an interface such as net_dev to provide packets to accelerator circuitry 420 and packets bypass network filter chains of Linux kernel. Similarly, one or more of services 404-1 or 404-N, where N is an integer, can utilize a net_dev to provide packets to accelerator circuitry 420 and packets bypass network filter chains of Linux kernel. Examples of development of net_dev are described herein. Host 402-0 can copy packets from application memory space to memory space of accelerator circuitry 420 through Peripheral Component Interconnect express (PCIe) or Compute Express Link (CXL) links by a direct memory access (DMA) circuitry. In some examples, network interface device 410 can include one or more of the following: a network interface device, a data processing unit (DPU), infrastructure processing unit (IPU), smartNIC, forwarding element, router, switch, network-attached appliance (e.g., storage, memory, accelerator, processors, security), and so forth.

Accelerator circuitry 420 can be configured so that content of device queues (e.g., packets from one or more of services 404-0 or 404-N) can be processed by one or more network filters performed by accelerator circuitry 420. Accelerator circuitry 420 can be programmed to associate a device queue with a particular service (e.g., service in pod A or service in pod B).

Accelerator circuitry 420 can be implemented as one or more of: application specific integrated circuit (ASIC), field programmable gate array (FPGA), packet processor, cores, etc. In some examples, accelerator circuitry 420 can be programmed by a packet processing program language to perform network filter chain operations. The network filter chain can implement user-defined rules to selectively block or allow network traffic based on various criteria such as Internet Protocol (IP) addresses, ingress ports, egress ports, applicable protocol, and packet contents. The network filter can be configured using various user-space tools, such as Linux IPTABLES, nftables, and ebtables. The network filter chain rules can be applied to different network interfaces or traffic types, and can be organized into chains and tables for filtering logic. Accelerator circuitry 420 can be configured to perform switching, routing, Access Control List (ACL), connection tracking, security permitted list lookup, packet ordering domain queuing, link aggregation group (LAG), Virtual Server Instance (VSI) load balancing, packet flow policing and metering, tunnel termination (e.g., encapsulation and/or decapsulation), and network address translation (NAT).

Example packet processing program languages include: configuration file, OneAPI, Programming protocol independent packet processors (P4), Software for Open Networking in the Cloud (SONiC), Broadcom^{®} Network Programming Language (NPL), NVIDIA^{®} CUDA^{®}, NVIDIA^{®} DOCA^{™}, Data Plane Development Kit (DPDK), OpenDataPlane (ODP), Infrastructure Programmer Development Kit (IPDK), eBPF, x86 compatible executable binaries or other executable binaries.

Accelerator circuitry 420 can be configured to route and tunnel packets to kernel 434 and decapsulate packets prior to providing packets to kernel 434. A tunnel can be consistent with one or more of: Generic Routing Encapsulation (GRE), Virtual Extensible LAN (VXLAN), Stateless Transport Tunneling (STT), Geneve, or others. In some examples, kernel 434 can execute on one or more processors 430. For communications from a service to another service, accelerator circuitry 420 can perform tunnel encapsulation and decapsulation and session contract setup. For a service's original IP address, accelerator circuitry 420 can be configured with routing and forwarding rules can specify a tunnel peer IP address for the service.

One or more proxies 432 can receive packets from kernel 434 and process packets to make a connection to a destination application. Kernel 434 can perform selection of a proxy of the one or more proxies 432 to process the packets from a particular service. Kernel 434 can provide packets to one or more proxies 432 for the one or more proxies 432 to determine a destination for the packets (e.g., service in container or pod B or container or pod A or service executing on a platform accessible by transmission using a network interface).

Telemetry and metrics can be exported to other telemetry agents for visibility of mesh operation (e.g., latency of packet transmission or time for a proxy to process one or more packets). Based on monitoring of load on one or more proxies 432 through metrics collected in network interface device 410 from the one or more proxies 432, kernel 434 can scale up or down one or more of compute, networking, or memory resources of the network interface device allocated to perform the one or more proxies 432. For example, based on a latency of proxy operations being higher than a threshold level, kernel 434 can scale up one or more of compute, networking, or memory resources of the network interface device allocated to perform the one or more proxies 432. For example, based on a latency of proxy operations being lower than the threshold level, kernel 434 can scale down one or more of compute, networking, or memory resources of the network interface device allocated to perform the one or more proxies 432.

For example, based on a latency of proxy operations being higher than a threshold level, kernel 434 can scale up a number of proxies 432 allocated for use by a particular service. For example, based on a latency of proxy operations being lower than the threshold level, kernel 434 can scale down a number of proxies 432 allocated for use by a particular service.

Kernel 434 can also provide one or more of services 404-0 to 404-N with utilization of accelerator circuitry 420 via libraries run in user space. For example, access to accelerator circuitry 420 via libraries run in user space or kernel space can cause performance of compression of header and/or payload (e.g., Zstandard), cryptography (e.g., security of tunnels, handshakes, Transport Layer Security (TLS), policy, load balancing among services, reliable transport (e.g., Transmission Control Protocol (TCP), quick UDP Internet Connections (QUIC), remote direct memory access (RDMA)), domain name space (DNS) lookup of Uniform Resource Locator (URL), and so forth.

In a service mesh interface, one or more proxies 432 (e.g., Envoy) can perform traffic redirection. One or more proxies 432 can perform buffering, routing/forwarding, rate limiting, and other operations. For example, one or more proxies 432 can direct packets to another pod in a cluster (e.g., podA or podB) or outside the cluster through network interface 440. If packet forwarding is to send packets to one or more of hosts 402-0 to 402-N, accelerator circuitry 420 can provide the packets via a device interface (e.g., PCIe or CXL). If packet forwarding is to a host system not connected to accelerator circuitry 420 via a device interface, then accelerator circuitry 420 can cause packets to be transmitted through a network interface 440 to another host system.

One or more proxies 432 can perform at least one or more of: Transmission Control Protocol (TCP) proxy to forward packets on a connection on a given port to services which advertise that port; a User Datagram Protocol (UDP) proxy; a Hypertext Transfer Protocol (HTTP) proxy to redirect requests based on parameters such as path, authority, content type, runtime values, and so forth; a Transport Layer Security (TLS) client certificate authentication authority; TLS termination; application layer communication; configuration application program interfaces (APIs) for service discovery such as host information, backend clusters, listening sockets, HTTP routing, and cryptographic items; load balancing among services in a cluster based on service discovery and health check data; load balancing and traffic management such as automatic retries, circuit breaking, request shadowing, rate limiting via an external rate-limiting service, and outlier detection; statistics, access logging, and distributed tracing for SREs to ensure the smooth operation of the service mesh; and others.

Various examples of Envoy proxy operation are at least in https://github.com/envoyproxy/envoy While examples are described with respect to Envoy proxy, other proxies can be used, such as Rust Proxy, NGINX Proxy, HAProxy, and so forth.

An example operation of components of the system are as follows. At (1), service 404-0 can communicate at least one packet using a netdev (e.g., net_dev) (executed by host 402-0) that bypasses network filter operations with accelerator circuitry 420. At (2), accelerator circuitry 420 can tunnel the at least one packet to net_dev endpoint (executed by processors 430), which de-tunnels the at least one packet. At (3), by a net_dev interface (executed by processors 430), accelerator circuitry 420 can communicate packets to kernel 434 (executed by processors 430) and kernel 434 can select one or more proxies 432 (executed by processors 430) for use by the at least one packet from service 404-0. Based on determination of the proxy to transmit the at least one packet from service 404-0 to service 404-N, at (4), accelerator circuitry 420 can tunnel the at least one packet from kernel 434. At (5), a net_dev (executed by host 402-N) can de-tunnel the at least one packet and provide the at least one packet to service 404-N for processing.

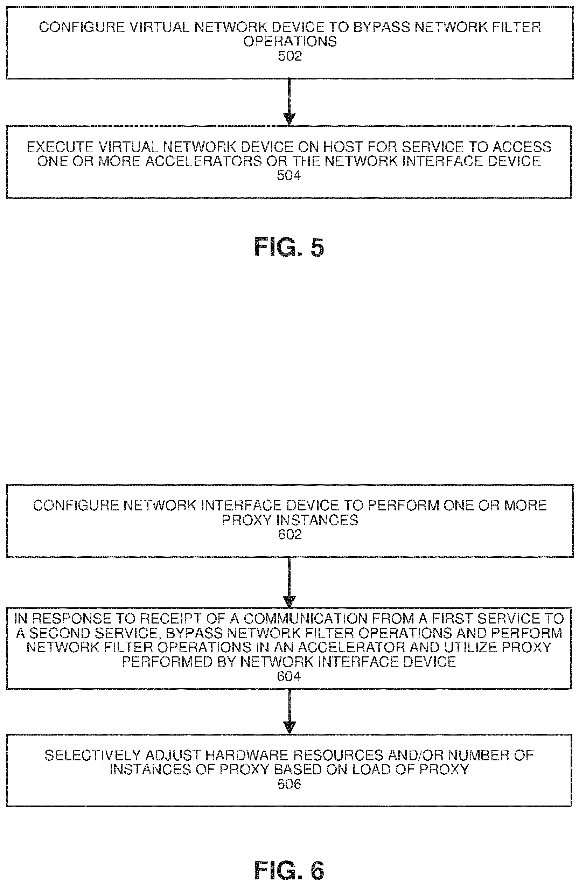

FIG. 5 depicts an example of process to generate a network device. Linux net_dev refers to network device drivers and related infrastructure in the Linux kernel. Linux net_dev can manage network interfaces, routing, and other network-related tasks. The net-dev subsystem includes code to process various network protocols and technologies, including Ethernet and other protocols.

At 502, a software and driver development package can be utilized to create a net_dev that bypasses network filtering of a kernel. For example, Infrastructure Programmer Development Kit (IPDK) is a software and driver package that can be utilized to create a net_dev that utilizes a PCIe or CXL link from a host to accelerator directly and bypasses network filtering of the net_dev. For example, Linux net_dev ETH0, ENO0 can simulate the accelerator and utilize IPDK Container Dedicated Queues (CDQs) to transfer packets from a service to the accelerator. The net_dev can provide a handle of a network interface device for a service to send or receive packet traffic.

At 504, a service can utilize the net_dev to access kernel or user space features of one or more accelerators or a network interface device to provide packets to a proxy. In some examples, the one or more accelerators or a network interface device can perform the network filtering on packets from the host as well as tunneling of packets to a kernel.

FIG. 6 depicts an example process. The process can be performed by a host system and/or network interface device, in some examples. At 602, a network interface device can be configured to perform proxy operations for a service executing on a host. Proxy operations can include one or more of: identification of a target service, routing and forwarding of traffic to a device that executes the target service, rate limiting, access control list, and so forth.

At 604, in response to receipt of a request from a first service to communicate with a second service, the first service can bypass network filters and utilize an accelerator associated with the network interface device to perform the network filters prior to utilization of a proxy performed by the network interface device. The first service can utilize a virtual network device to communicate with the network interface device and/or an associated accelerator device. For example, the proxy can be associated with the first service based on a configuration. Various example operations of the proxy are described herein.

At 606, based on a load on the proxy, resources and/or number of proxy instances can be scaled up or down. For example, processor, memory, or network resources can be scaled up or down based on latency of operation of the proxy. For example, a number of instances of the proxy allocated to the first service can be scaled up or down based on latency of operation of the proxy.

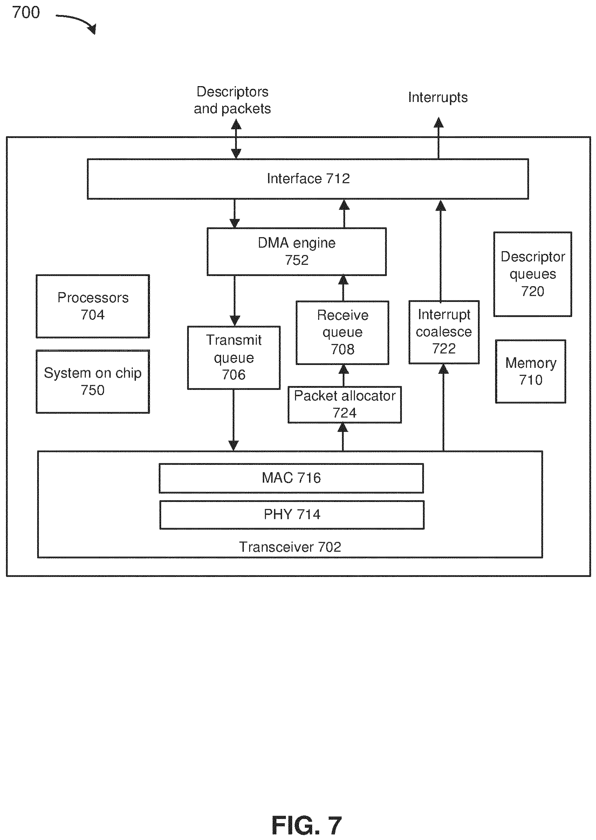

FIG. 7 depicts an example network interface device. The network interface device can include processors and circuitry configured to perform network filter operations and proxy operations, as described herein. Network interface 700 can include transceiver 702, processors 704, transmit queue 706, receive queue 708, memory 710, and bus interface 712, and DMA engine 752. Transceiver 702 can be capable of receiving and transmitting packets in conformance with the applicable protocols such as Ethernet as described in IEEE 802.3, although other protocols may be used. Transceiver 702 can receive and transmit packets from and to a network via a network medium (not depicted). Transceiver 702 can include PHY circuitry 714 and media access control (MAC) circuitry 716. PHY circuitry 714 can include encoding and decoding circuitry (not shown) to encode and decode data packets according to applicable physical layer specifications or standards. MAC circuitry 716 can be configured to assemble data to be transmitted into packets, that include destination and source addresses along with network control information and error detection hash values.

Processors 704 can be any a combination of a: processor, core, graphics processing unit (GPU), field programmable gate array (FPGA), application specific integrated circuit (ASIC), or other programmable hardware device that allow programming of network interface 700. For example, a "smart network interface" can provide packet processing capabilities in the network interface using processors 704. Configuration of operation of processors 704, including its data plane, can be programmed using a packet processing program language.

System on chip 750 can include microprocessors that execute instructions to perform network filter operations, kernel operations, and proxy operations, as described herein.

Packet allocator 724 can provide distribution of received packets for processing by multiple CPUs or cores using timeslot allocation described herein or RSS. When packet allocator 724 uses RSS, packet allocator 724 can calculate a hash or make another determination based on contents of a received packet to determine which CPU or core is to process a packet.

Interrupt coalesce 722 can perform interrupt moderation whereby network interface interrupt coalesce 722 waits for multiple packets to arrive, or for a time-out to expire, before generating an interrupt to host system to process received packet(s). Receive Segment Coalescing (RSC) can be performed by network interface 700 whereby portions of incoming packets are combined into segments of a packet. Network interface 700 provides this coalesced packet to an application.

Direct memory access (DMA) engine 752 can copy a packet header, packet payload, and/or descriptor directly from host memory to the network interface or vice versa, instead of copying the packet to an intermediate buffer at the host and then using another copy operation from the intermediate buffer to the destination buffer.

Memory 710 can be any type of volatile or non-volatile memory device and can store any queue or instructions used to program network interface 700. Transmit queue 706 can include data or references to data for transmission by network interface. Receive queue 708 can include data or references to data that was received by network interface from a network. Descriptor queues 720 can include descriptors that reference data or packets in transmit queue 706 or receive queue 708. Bus interface 712 can provide an interface with host device (not depicted). For example, bus interface 712 can be compatible with PCI, PCI Express, PCI-x, Serial ATA, and/or USB compatible interface (although other interconnection standards may be used).

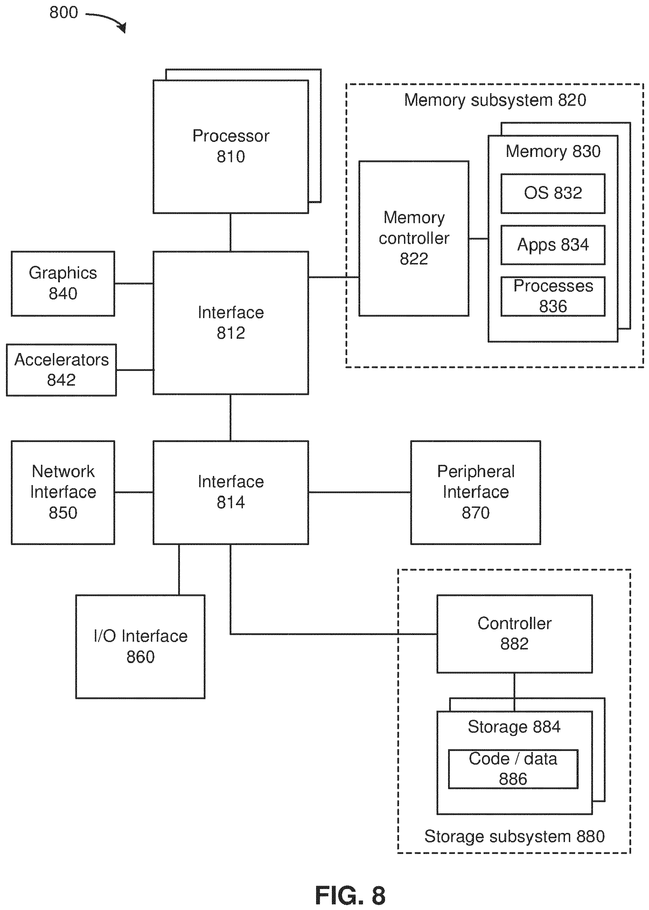

FIG. 8 depicts an example computing system. Components of system 800 (e.g., processor 810, network interface 850, and so forth) can be configured processors and circuitry configured to perform network filter operations, kernel, and proxy operations, as described herein. System 800 includes processor 810, which provides processing, operation management, and execution of instructions for system 800. Processor 810 can include any type of microprocessor, central processing unit (CPU), graphics processing unit (GPU), processing core, or other processing hardware to provide processing for system 800, or a combination of processors. Processor 810 controls the overall operation of system 800, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

In one example, system 800 includes interface 812 coupled to processor 810, which can represent a higher speed interface or a high throughput interface for system components that needs higher bandwidth connections, such as memory subsystem 820 or graphics interface components 840, or accelerators 842. Interface 812 represents an interface circuit, which can be a standalone component or integrated onto a processor die. Where present, graphics interface 840 interfaces to graphics components for providing a visual display to a user of system 800. In one example, graphics interface 840 can drive a high definition (HD) display that provides an output to a user. High definition can refer to a display having a pixel density of approximately 100 PPI (pixels per inch) or greater and can include formats such as full HD (e.g., 1080p), retina displays, 4K (ultra-high definition or UHD), or others. In one example, the display can include a touchscreen display. In one example, graphics interface 840 generates a display based on data stored in memory 830 or based on operations executed by processor 810 or both. In one example, graphics interface 840 generates a display based on data stored in memory 830 or based on operations executed by processor 810 or both.

Accelerators 842 can be a fixed function or programmable offload engine that can be accessed or used by a processor 810. For example, an accelerator among accelerators 842 can provide compression (DC) capability, cryptography services such as public key encryption (PKE), cipher, hash/authentication capabilities, decryption, or other capabilities or services. In some cases, accelerators 842 can be integrated into a CPU socket (e.g., a connector to a motherboard or circuit board that includes a CPU and provides an electrical interface with the CPU). For example, accelerators 842 can include a single or multi-core processor, graphics processing unit, logical execution unit single or multi-level cache, functional units usable to independently execute programs or threads, application specific integrated circuits (ASICs), neural network processors (NNPs), programmable control logic, and programmable processing elements such as field programmable gate arrays (FPGAs) or programmable logic devices (PLDs). Accelerators 842 can provide multiple neural networks, CPUs, processor cores, general purpose graphics processing units, or graphics processing units can be made available for use by artificial intelligence (AI) or machine learning (ML) models. For example, the AI model can use or include one or more of: a reinforcement learning scheme, Q-learning scheme, deep-Q learning, or Asynchronous Advantage Actor-Critic (A3C), combinatorial neural network, recurrent combinatorial neural network, or other AI or ML model. Multiple neural networks, processor cores, or graphics processing units can be made available for use by AI or ML models.

Memory subsystem 820 represents the main memory of system 800 and provides storage for code to be executed by processor 810, or data values to be used in executing a routine. Memory subsystem 820 can include one or more memory devices 830 such as read-only memory (ROM), flash memory, one or more varieties of random access memory (RAM) such as DRAM, or other memory devices, or a combination of such devices. Memory 830 stores and hosts, among other things, operating system (OS) 832 to provide a software platform for execution of instructions in system 800. Additionally, applications 834 can execute on the software platform of OS 832 from memory 830. Applications 834 represent programs that have their own operational logic to perform execution of one or more functions. Processes 836 represent agents or routines that provide auxiliary functions to OS 832 or one or more applications 834 or a combination. OS 832, applications 834, and processes 836 provide software logic to provide functions for system 800. In one example, memory subsystem 820 includes memory controller 822, which is a memory controller to generate and issue commands to memory 830. It will be understood that memory controller 822 could be a physical part of processor 810 or a physical part of interface 812. For example, memory controller 822 can be an integrated memory controller, integrated onto a circuit with processor 810.

In some examples, OS 832 can be Linux^{®}, Windows^{®} Server or personal computer, FreeBSD^{®}, Android^{®}, MacOS^{®}, iOS^{®}, VMware vSphere, openSUSE, RHEL, CentOS, Debian, Ubuntu, or any other operating system. The OS and driver can execute on a CPU sold or designed by Intel^{®}, ARM^{®}, AMD^{®}, Qualcomm^{®}, IBM^{®}, Texas Instruments^{®}, among others. In some examples, a driver can configure network interface 850 to perform network filter operations and proxy operations, as described herein. In some examples, a driver can enable or disable offload to network interface 850 to perform network filter operations and proxy operations, as described herein. A driver can advertise capability of network interface 850 to perform network filter operations and proxy operations, as described herein.

While not specifically illustrated, it will be understood that system 800 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a Peripheral Component Interconnect (PCI) bus, a Hyper Transport or industry standard architecture (ISA) bus, a small computer system interface (SCSI) bus, a universal serial bus (USB), or an Institute of Electrical and Electronics Engineers (IEEE) standard 1394 bus (Firewire).

In one example, system 800 includes interface 814, which can be coupled to interface 812. In one example, interface 814 represents an interface circuit, which can include standalone components and integrated circuitry. In one example, multiple user interface components or peripheral components, or both, couple to interface 814. Network interface 850 provides system 800 the ability to communicate with remote devices (e.g., servers or other computing devices) over one or more networks. Network interface 850 can include an Ethernet adapter, wireless interconnection components, cellular network interconnection components, USB (universal serial bus), or other wired or wireless standards-based or proprietary interfaces. Network interface 850 can transmit data to a device that is in the same data center or rack or a remote device, which can include sending data stored in memory.

Some examples of network interface 850 are part of an Infrastructure Processing Unit (IPU) or data processing unit (DPU) or utilized by an IPU or DPU. An xPU can refer at least to an IPU, DPU, GPU, GPGPU, or other processing units (e.g., accelerator devices). An IPU or DPU can include a network interface with one or more programmable pipelines or fixed function processors to perform offload of operations that could have been performed by a CPU. The IPU or DPU can include one or more memory devices. In some examples, the IPU or DPU can perform virtual switch operations, manage storage transactions (e.g., compression, cryptography, virtualization), and manage operations performed on other IPUs, DPUs, servers, or devices.

In one example, system 800 includes one or more input/output (I/O) interface(s) 860. I/O interface 860 can include one or more interface components through which a user interacts with system 800 (e.g., audio, alphanumeric, tactile/touch, or other interfacing). Peripheral interface 870 can include any hardware interface not specifically mentioned above. Peripherals refer generally to devices that connect dependently to system 800. A dependent connection is one where system 800 provides the software platform or hardware platform or both on which operation executes, and with which a user interacts.

In one example, system 800 includes storage subsystem 880 to store data in a nonvolatile manner. In one example, in certain system implementations, at least certain components of storage 880 can overlap with components of memory subsystem 820. Storage subsystem 880 includes storage device(s) 884, which can be or include any conventional medium for storing large amounts of data in a nonvolatile manner, such as one or more magnetic, solid state, or optical based disks, or a combination. Storage 884 holds code or instructions and data 886 in a persistent state (e.g., the value is retained despite interruption of power to system 800). Storage 884 can be generically considered to be a "memory," although memory 830 is typically the executing or operating memory to provide instructions to processor 810. Whereas storage 884 is nonvolatile, memory 830 can include volatile memory (e.g., the value or state of the data is indeterminate if power is interrupted to system 800). In one example, storage subsystem 880 includes controller 882 to interface with storage 884. In one example controller 882 is a physical part of interface 814 or processor 810 or can include circuits or logic in both processor 810 and interface 814.

In an example, system 800 can be implemented using interconnected compute platforms of processors, memories, storages, network interfaces, and other components. High speed interconnects can be used such as: Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Peripheral Component Interconnect express (PCIe), Intel QuickPath Interconnect (QPI), Intel Ultra Path Interconnect (UPI), Intel On-Chip System Fabric (IOSF), Omni-Path, Compute Express Link (CXL), HyperTransport, high-speed fabric, NVLink, Advanced Microcontroller Bus Architecture (AMBA) interconnect, OpenCAPI, Gen-Z, Infinity Fabric (IF), Cache Coherent Interconnect for Accelerators (CCIX), 3GPP Long Term Evolution (LTE) (4G), 3GPP 5G, and variations thereof. Data can be copied or stored to virtualized storage nodes or accessed using a protocol such as NVMe over Fabrics (NVMe-oF) or NVMe.

Communications between devices can take place using a network that provides die-to-die communications; chip-to-chip communications; circuit board-to-circuit board communications; and/or package-to-package communications. One or more components of system 600 can be implemented as part of a system-on-chip (SoC).

Examples herein may be implemented in various types of computing and networking equipment, such as switches, routers, racks, and blade servers such as those employed in a data center and/or server farm environment. The servers used in data centers and server farms comprise arrayed server configurations such as rack-based servers or blade servers. These servers are interconnected in communication via various network provisions, such as partitioning sets of servers into Local Area Networks (LANs) with appropriate switching and routing facilities between the LANs to form a private Intranet. For example, cloud hosting facilities may typically employ large data centers with a multitude of servers. A blade comprises a separate computing platform that is configured to perform server-type functions, that is, a "server on a card." Accordingly, a blade can include components common to conventional servers, including a main printed circuit board (main board) providing internal wiring (e.g., buses) for coupling appropriate integrated circuits (ICs) and other components mounted to the board.

In some examples, network interface and other embodiments described herein can be used in connection with a base station (e.g., 3G, 4G, 5G and so forth), macro base station (e.g., 5G networks), picostation (e.g., an IEEE 802.11 compatible access point), nanostation (e.g., for Point-to-MultiPoint (PtMP) applications), on-premises data centers, off-premises data centers, edge network elements, edge servers, edge switches, fog network elements, and/or hybrid data centers (e.g., data center that use virtualization, cloud and software-defined networking to deliver application workloads across physical data centers and distributed multi-cloud environments).

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, APIs, instruction sets, computing code, computer code, code segments, computer code segments, words, values, symbols, or combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation. A processor can be one or more combination of a hardware state machine, digital control logic, central processing unit, or any hardware, firmware and/or software elements.

Some examples may be implemented using or as an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or combination thereof.

According to some examples, a computer-readable medium may include a non-transitory storage medium to store or maintain instructions that when executed by a machine, computing device or system, cause the machine, computing device or system to perform methods and/or operations in accordance with the described examples. The instructions may include any suitable type of code, such as source code, compiled code, interpreted code, executable code, static code, dynamic code, and the like. The instructions may be implemented according to a predefined computer language, manner or syntax, for instructing a machine, computing device or system to perform a certain function. The instructions may be implemented using any suitable high-level, low-level, object-oriented, visual, compiled and/or interpreted programming language.

One or more aspects of at least one example may be implemented by representative instructions stored on at least one machine-readable medium which represents various logic within the processor, which when read by a machine, computing device or system causes the machine, computing device or system to fabricate logic to perform the techniques described herein. Such representations, known as "IP cores" may be stored on a tangible, machine readable medium and supplied to various customers or manufacturing facilities to load into the fabrication machines that actually make the logic or processor.

The appearances of the phrase "one example" or "an example" are not necessarily all referring to the same example or embodiment. Any aspect described herein can be combined with any other aspect or similar aspect described herein, regardless of whether the aspects are described with respect to the same figure or element. Division, omission or inclusion of block functions depicted in the accompanying figures does not infer that the hardware components, circuits, software and/or elements for implementing these functions would necessarily be divided, omitted, or included in embodiments.

Some examples may be described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The term "asserted" used herein with reference to a signal denote a state of the signal, in which the signal is active, and which can be achieved by applying any logic level either logic 0 or logic 1 to the signal. The terms "follow" or "after" can refer to immediately following or following after some other event or events. Other sequences of operations may also be performed according to alternative embodiments. Furthermore, additional operations may be added or removed depending on the particular applications. Any combination of changes can be used and one of ordinary skill in the art with the benefit of this disclosure would understand the many variations, modifications, and alternative embodiments thereof.

Disjunctive language such as the phrase "at least one of X, Y, or Z," unless specifically stated otherwise, is otherwise understood within the context as used in general to present that an item, term, etc., may be either X, Y, or Z, or combination thereof (e.g., X, Y, and/or Z). Thus, such disjunctive language is not generally intended to, and should not, imply that certain embodiments require at least one of X, at least one of Y, or at least one of Z to each be present. Additionally, conjunctive language such as the phrase "at least one of X, Y, and Z," unless specifically stated otherwise, should also be understood to mean X, Y, Z, or combination thereof, including "X, Y, and/or Z."'

Illustrative examples of the devices, systems, and methods disclosed herein are provided below. An embodiment of the devices, systems, and methods may include one or more, and combination of, the examples described below.

Example 1 includes one or more examples and includes an apparatus comprising: a host interface and a network interface device circuitry comprising circuitry coupled to the host interface, wherein the circuitry is configured to: perform offloaded proxy operations of a service mesh interface for multiple services, wherein the circuitry is accessible via a virtual network device by a host processor-executed service of the multiple services and wherein the service mesh interface is to provide access to a service mesh to communicate with one or more services.

Example 2 includes one or more examples, wherein the offloaded proxy operations of a service mesh interface comprise packet forwarding and packet filtering.

Example 3 includes one or more examples, wherein the virtual network device comprises at least one device driver configured to bypass performance of operations of at least one network filter chain on packets from the host processor-executed service of the multiple services and provide the packets to the circuitry.

Example 4 includes one or more examples, wherein the circuitry is to perform the operations of at least one network filter chain on the packets prior to performance of the offloaded proxy operations of the service mesh interface.

Example 5 includes one or more examples, wherein the virtual network device is based on a software development kit and the host interface is to copy a packet from the host to the circuitry.

Example 6 includes one or more examples, wherein the circuitry comprises an accelerator and at least one processor.

Example 7 includes one or more examples, wherein the circuitry is to adjust a number of instances of a proxy based on a load from the offloaded proxy operations according to a policy associated with the host processor-executed service of the multiple services.

Example 8 includes one or more examples, wherein the circuitry is to tunnel packets from the host processor-executed service of the multiple services to a processor-executed network kernel stack in the circuitry.

Example 9 includes one or more examples, wherein the network interface device comprise one or more of: an infrastructure processing unit (IPU), data processing unit (DPU), smartNIC, or network interface controller.

Example 10 includes one or more examples, and includes a method that includes: at a network interface device, performing offloaded proxy operations of a service mesh interface for multiple services, wherein the network interface device is accessible via a virtual network device by a host processor-executed service of the multiple services and wherein the service mesh interface is to provide access to a service mesh to communicate with one or more services.

Example 11 includes one or more examples, wherein the offloaded proxy operations of a service mesh interface comprise packet forwarding and packet filtering.

Example 12 includes one or more examples, wherein the virtual network device comprises at least one device driver configured to bypass performance of operations of at least one network filter chain on packets from the host processor-executed service of the multiple services and provide the packets to the network interface device.

Example 13 includes one or more examples, and includes the network interface device performing the operations of at least one network filter chain on the packets prior to performance of the offloaded proxy operations of the service mesh interface.

Example 14 includes one or more examples, wherein the virtual network device is based on a software development kit.

Example 15 includes one or more examples, wherein the network interface device comprises an accelerator and at least one processor and the accelerator performs the operations of at least one network filter chain on packets from the host processor-executed service of the multiple services.

Example 16 includes one or more examples, and includes adjusting a number of instances of a proxy based on a load from the offloaded proxy operations according to a policy associated with the host processor-executed service of the multiple services.

Example 17 includes one or more examples, and includes a non-transitory computer-readable medium comprising instructions, that if executed by one or more processors, cause the one or more processors to: execute a virtual network device to provide access to a network interface device to perform offloaded proxy operations of a service mesh interface for multiple services, wherein the network interface device is accessible via the virtual network device by a host processor-executed service of the multiple services and wherein the service mesh interface is to provide access to a service mesh to communicate with one or more services.

Example 18 includes one or more examples, wherein the network interface device comprise one or more of: an infrastructure processing unit (IPU), smartNIC, network interface controller, or network-attached appliance.

Example 19 includes one or more examples, wherein the virtual network device comprises at least one device driver configured to bypass performance of operations of at least one network filter chain on packets from the host processor-executed service of the multiple services and provide the packets to the network interface device.

Example 20 includes one or more examples, wherein the network interface device performs operations of at least one network filter chain on packets from the host processor-executed service of the multiple services prior to performance of the offloaded proxy operations of the service mesh interface.

## Claims

1. An apparatus comprising:
a host interface and
a network interface device circuitry comprising circuitry coupled to the host interface, wherein the circuitry is configured to:
perform offloaded proxy operations of a service mesh interface for multiple services, wherein the circuitry is accessible via a virtual network device by a host processor-executed service of the multiple services and wherein the service mesh interface is to provide access to a service mesh to communicate with one or more services.

2. The apparatus of claim 1, wherein the offloaded proxy operations of a service mesh interface comprise packet forwarding and packet filtering.

3. The apparatus of claim 1, wherein the virtual network device comprises at least one device driver configured to bypass performance of operations of at least one network filter chain on packets from the host processor-executed service of the multiple services and provide the packets to the circuitry.

4. The apparatus of claim 3, wherein the circuitry is to perform the operations of at least one network filter chain on the packets prior to performance of the offloaded proxy operations of the service mesh interface.

5. The apparatus of claim 1, wherein the virtual network device is based on a software development kit and the host interface is to copy a packet from the host to the circuitry.

6. The apparatus of claim 1, wherein the circuitry comprises an accelerator and at least one processor.

7. The apparatus of claim 1, wherein the circuitry is to adjust a number of instances of a proxy based on a load from the offloaded proxy operations according to a policy associated with the host processor-executed service of the multiple services.

8. The apparatus of claim 1, wherein the circuitry is to tunnel packets from the host processor-executed service of the multiple services to a processor-executed network kernel stack in the circuitry.

9. The apparatus of any of claims 1-8, wherein the network interface device comprise one or more of: an infrastructure processing unit (IPU), data processing unit (DPU), smartNIC, or network interface controller.

10. A method comprising:
at a network interface device, performing offloaded proxy operations of a service mesh interface for multiple services, wherein the network interface device is accessible via a virtual network device by a host processor-executed service of the multiple services, wherein the service mesh interface is to provide access to a service mesh to communicate with one or more services, and wherein the offloaded proxy operations of a service mesh interface comprise packet forwarding and packet filtering.

11. The method of claim 10, wherein the virtual network device comprises at least one device driver configured to bypass performance of operations of at least one network filter chain on packets from the host processor-executed service of the multiple services and provide the packets to the network interface device.

12. The method of claim 11, comprising:
the network interface device performing the operations of at least one network filter chain on the packets prior to performance of the offloaded proxy operations of the service mesh interface.

13. The method of claim 10, wherein the network interface device comprises an accelerator and at least one processor and the accelerator performs the operations of at least one network filter chain on packets from the host processor-executed service of the multiple services.

14. The method of any of claims 10-13, comprising:
adjusting a number of instances of a proxy based on a load from the offloaded proxy operations according to a policy associated with the host processor-executed service of the multiple services.

15. A computer-readable medium comprising instructions that if executed, by one or more processors, implement a method or realise an apparatus as claimed in any preceding claim.
